# EUROPEAN PATENT APPLICATION

(11) **EP 4 614 711 A1**
(43) Date of publication of application: **10.09.2025**
(21) Application number: 24852300.3
(22) Date of filing: 06.08.2024
(51) Int. Cl.: H01M 50/434, H01M 50/446, H01M 50/449, H01M 50/431, H01M 10/052

(54) **SEPARATOR FOR ELECTROCHEMICAL DEVICE AND ELECTROCHEMICAL DEVICE COMPRISING SAME**

(30) Priority: 08.08.2023 KR 20230103351
(71) Applicant: LG Energy Solution, Ltd., Seoul 07335 (KR)
(72) Inventor: BAE, Won Sik, Daejeon 34122 (KR); LEE, So Yeong, Daejeon 34122 (KR); RYU, Bi Oh, Daejeon 34122 (KR)
(74) Representative: Hoffmann Eitle
(86) International application number: PCT/KR2024/011622
(87) International publication number: WO 2025/033946

(57) **Abstract**

The present disclosure relates to a separator for an electrochemical device, and an electrochemical device including the same, and more particularly, to a separator for an electrochemical device including a boron nitride-based compound in a coating layer, thereby adsorbing transition metal ions eluted from an electrode to an electrolyte liquid, and improving heat resistance of the separator, and an electrochemical device including the same.

## Description

### Technical Field

The present disclosure claims priority to and the benefits of Korean Patent Application No. 10-2023-0103351, filed with the Korean Intellectual Property Office on August 8, 2023, the entire contents of which are incorporated herein by reference. The present disclosure relates to a separator for an electrochemical device, and an electrochemical device including the same. In particular, the present disclosure relates to a separator for an electrochemical device including a boron nitride-based compound in a coating layer, thereby adsorbing transition metal ions eluted from an electrode to an electrolyte liquid, and improving heat resistance of the separator, and an electrochemical device including the same.

### Background Art

Among components of an electrochemical device, a separator includes a polymer substrate having a porous structure located between a positive electrode and a negative electrode and separates the positive electrode and the negative electrode, and performs roles of preventing an electrical short-circuit between the two electrodes and allowing an electrolyte and ions to pass through. The separator itself does not participate in an electrochemical reaction, however, physical properties such as wettability for an electrolyte liquid, the degree of porosity and thermal shrinkage affect performance and safety of an electrochemical device.

Accordingly, in order to strengthen physical properties of a separator, a coating layer is added to a porous polymer substrate, and various methods to change properties of the coating layer have been attempted by adding various materials to the coating layer. For example, inorganic substances may be added to the coating layer to improve mechanical strength of the separator, or inorganic substances or hydrates may be added to the coating layer to improve flame retardancy and heat resistance of the polymer substrate.

A separator may be attached to an electrode through a lamination process, and in order to secure adhesive strength between the electrode and the separator, a binder resin may be added to a slurry for a coating layer of the separator.

Meanwhile, a separator has a problem in that a breakdown voltage decreases as it becomes thinner, and there have been problems in that battery performance declines due to dendrites formed on an electrode, and a short-circuit occurs in the battery.

Accordingly, studies on a separator capable of securing battery performance, improving battery safety, and preventing dendrite formation have been required.

### DISCLOSURE

### Technical Problem

The present disclosure is directed to providing a separator for an electrochemical device capable of securing heat resistance of the separator by adding a boron nitride-based compound to a coating layer included in the separator and adjusting a content thereof, and capable of adsorbing transition metal ions eluted from an electrode, and an electrochemical device including the same.

However, problems to be solved by the present disclosure are not limited to the above-mentioned problem, and other problems not mentioned will be clearly understood by those skilled in the art from the following description.

### Technical Solution

One embodiment of the present disclosure provides a separator for an electrochemical device, the separator including: a porous polymer substrate; and a coating layer provided on at least one surface of the porous polymer substrate and including a boron nitride-based compound, polymer binder particles and inorganic particles, wherein a content of the inorganic particles is 80 parts by weight or greater with respect to 100 parts by weight of the coating layer.

According to one embodiment of the present disclosure, a content of the boron nitride-based compound in the coating layer may be 0.1 parts by weight or greater and 20 parts by weight or less with respect to 100 parts by weight of the coating layer.

According to one embodiment of the present disclosure, the boron nitride-based compound may be a boron nitride nanotube.

According to one embodiment of the present disclosure, the boron nitride-based compound may have an average outer diameter of 10 nm or greater and 100 nm or less.

According to one embodiment of the present disclosure, the boron nitride-based compound may have an average length of 1 µm or greater and 50 µm or less.

According to one embodiment of the present disclosure, the boron nitride-based compound may have an aspect ratio of 10 to 5,000.

According to one embodiment of the present disclosure, the boron nitride-based compound may have density of 1.0 g/cm³ or greater and 5.0 g/cm³ or less.

According to one embodiment of the present disclosure, the boron nitride-based compound may have a specific surface area of 20 m²/g or greater and 55 m²/g or less.

According to one embodiment of the present disclosure, the inorganic particle is one selected from boehmite, alumina and combinations thereof in the separator for an electrochemical device.

One embodiment of the present disclosure provides an electrochemical device including: a positive electrode; a negative electrode; and the separator interposed between the positive electrode and the negative electrode.

### Advantageous Effects

A separator for an electrochemical device according to one embodiment of the present disclosure is capable of minimizing dendrites formed on an electrode by adsorbing transition metal ions eluted from the electrode using, in a boron nitride-based compound, polarity of the compound generated by a difference in the electronegativity between nitrogen and boron, and a specific surface area of the boron nitride-based compound.

The separator for an electrochemical device according to one embodiment of the present disclosure is capable of improving heat resistance of the separator by using heat resistance of the boron nitride-based compound.

An electrochemical device according to one embodiment of the present disclosure minimizes dendrites formed on an electrode, thereby achieving battery safety, and improving battery performance.

### Brief Description of Drawings

FIGS. 1a and 1b are schematic diagrams of a separator for an electrochemical device according to one embodiment of the present disclosure. Specifically, FIG. 1a is a schematic diagram of a separator for an electrochemical device provided with a coating layer on one surface, and FIG. 1b is a schematic diagram of a separator for an electrochemical device provided with a coating layer on both surfaces.
FIG. 2 is a schematic diagram of an electrochemical device according to one embodiment of the present disclosure.

### Best Mode

In the present specification, a description of a certain part "including" certain components means that it may further include other components, and does not exclude other components unless particularly stated on the contrary.

In the present specification, "A and/or B" means "A and B, or A or B".

In the present specification, a description of being provided "on" one component means that another component may be further placed, and does not exclude another component being placed in between unless particularly stated on the contrary.

In the present specification, a property of "having pores" means that an object includes a plurality of pores, and by the structure of the pores being interconnected with each other, gaseous and/or liquid fluids may pass from one side to the other side of the object.

In the present specification, a separator has porous properties including a plurality of pores, and performs a role of a porous ion-conducting barrier allowing ions to pass through while blocking an electrical contact between a negative electrode and a positive electrode in an electrochemical device.

Hereinafter, the present disclosure will be described in more detail.

One embodiment of the present disclosure provides a separator for an electrochemical device 100, the separator including: a porous polymer substrate 110; and a coating layer 130 provided on at least one surface of the porous polymer substrate 110 and including a boron nitride-based compound 131, polymer binder particles 133 and inorganic particles 135, wherein a content of the inorganic particles 135 is 80 parts by weight or greater with respect to 100 parts by weight of the coating layer 130.

The separator for an electrochemical device 100 according to one embodiment of the present disclosure is capable of minimizing dendrites formed on an electrode by adsorbing transition metal ions eluted from the electrode using polarity of the compound generated by a difference in the electronegativity between nitrogen and boron in the boron nitride-based compound 131, and a specific surface area of the boron nitride-based compound 131. Furthermore, the separator for an electrochemical device 100 according to one embodiment of the present disclosure is capable of improving heat resistance of the separator by using excellent heat resistance of the boron nitride-based compound 131.

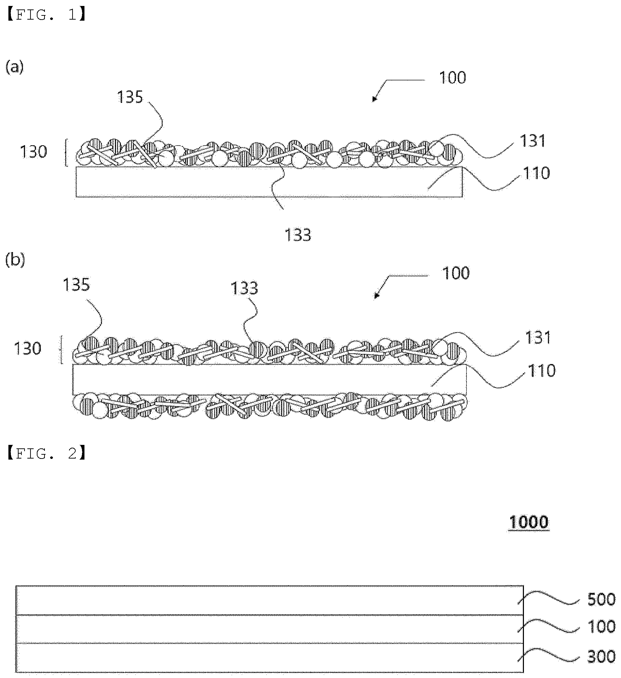

FIGS. 1a and 1b are schematic diagrams of the separator for an electrochemical device 100 according to one embodiment of the present disclosure. Specifically, FIG. 1a is a schematic diagram of the separator for an electrochemical device 100 provided with a coating layer 130 on one surface, and FIG. 1b is a schematic diagram of the separator for an electrochemical device 100 provided with a coating layer on both surfaces. The separator for an electrochemical device 100 according to one embodiment of the present disclosure will be specifically described with reference to FIGS. 1a and 1b.

According to one embodiment of the present disclosure, the separator for an electrochemical device 100 includes a porous polymer substrate 110. As described above, the separator for an electrochemical device 100 allows lithium ions to pass through while blocking an electrical contact by including the porous polymer substrate 110, and a shutdown function may be achieved at a proper temperature.

According to one embodiment of the present disclosure, the porous polymer substrate 110 may be prepared using a polyolefin-based resin as a base resin. Examples of the polyolefin-based resin may include polyethylene, polypropylene, polypentene and the like, and the polyolefin-based resin may include one or more types thereof. A porous separator, that is, a separator having a plurality of pores, prepared using such a polyolefin-based resin as a base resin may provide a shutdown function at a proper temperature.

According to one embodiment of the present disclosure, the polyolefin-based resin may have a weight average molecular weight of 500,000 or greater and 2,000,000 or less. By adjusting the weight average molecular weight of the polyolefin-based resin in the above-described range, compression resistance of the separator may be improved. Furthermore, when different types of polyolefin-based resins are used after mixing or a separator having a multilayer structure formed with different types of polyolefin-based resins is formed, the weight average molecular weight of the polyolefin-based resin may be calculated by adding the weight average molecular weight of each of the polyolefin-based resins depending on the content ratio.

In the present specification, the weight average molecular weight (Mw) may be measured by gel permeation chromatography (GPC, PL GPC220, Agilent Technologies), and a condition for the measurement may be set as follows.
- Column: PL Olexis (Polymer Laboratories)
- Solvent: TCB (trichlorobenzene)
- Flow rate: 1.0 ml/min
- Sample concentration: 1.0 mg/ml
- Injection volume: 200 µl
- Column temperature: 160°C
- Detector: Agilent High Temperature RI detector
- Standard: Polystyrene (corrected by third order function)

According to one embodiment of the present disclosure, the porous polymer substrate 110 may be prepared using a method (wet method) in which a polyolefin-based resin is mixed with a plasticizer (diluent) at a high temperature to form a single phase, the polymer material and the plasticizer are phase-separated during a cooling process, and then the plasticizer is extracted to form pores, and elongation and heat setting treatments are performed. In addition, the porous polymer substrate using a polyolefin-based resin may be provided with a core portion formed with a mixture of polyethylene and polypropylene, and a polyethylene skin portion laminated on both surfaces of the core portion.

According to one embodiment of the present disclosure, the average pore size and the maximum pore size of the separator 100 may be readily prepared to accord with the scope of the present disclosure by those skilled in the art through adjusting the mixing ratio of the plasticizer, the magnification of elongation, the heat setting treatment temperature and the like.

According to one embodiment of the present disclosure, the porous polymer substrate 110 may have a thickness of 1 µm or greater and 50 µm or less. Specifically, the porous polymer substrate 110 may have a thickness of 2 µm or greater and 45 µm or less, 3 µm or greater and 40 µm or less, 4 µm or greater and 35 µm or less, 5 µm or greater and 30 µm or less, 6 µm or greater and 25 µm or less, 7 µm or greater and 20 µm or less, or 8 µm or greater and 15 µm or less. By adjusting the thickness of the porous polymer substrate 110 in the above-described range, energy density of a battery may be improved.

According to one embodiment of the present disclosure, the porous polymer substrate 110 may have porosity of 10% by volume or greater and 90% by volume or less. Specifically, the porous polymer substrate 110 may have porosity of 10% by volume or greater and 90% by volume or less, 20% by volume or greater and 80% by volume or less, 30% by volume or greater and 70% by volume or less, or 40% by volume or greater and 60% by volume or less. By adjusting the porosity of the porous polymer substrate 110 in the above-described range, separator permeability of lithium ions may be controlled.

According to one embodiment of the present disclosure, the coating layer 130 is provided on at least one surface of the porous polymer substrate 110. Specifically, the separator for an electrochemical device 100 includes the coating layer 130 provided on one surface or both surfaces of the porous polymer substrate 110. By the separator for an electrochemical device 100 including the coating layer 130 provided on at least one surface of the porous polymer substrate 110 as described above, heat resistance of the separator is improved, mechanical properties are improved, and an occurrence of electrical short-circuit of an electrode caused by shrinkage of the separator at a high temperature may be prevented.

According to one embodiment of the present disclosure, the separator for an electrochemical device 100 includes a coating layer 130 including a boron nitride-based compound 131, polymer binder particles 133 and inorganic particles 135. By the coating layer 130 including the boron nitride-based compound 131, the polymer binder particles 133 and the inorganic particles 135 as described above, heat resistance of the separator 100 is improved, mechanical properties are improved, an occurrence of electrical short-circuit of an electrode caused by shrinkage of the separator 100 at a high temperature is prevented, and pores may be formed inside the coating layer 130. Furthermore, heat resistance of the separator 100 is improved, and transition metal ions eluted from an electrode may be adsorbed.

According to one embodiment of the present disclosure, the coating layer 130 may uniformly include the boron nitride-based compound 131, the polymer binder particles 133 and the inorganic particles 135. Specifically, the boron nitride-based compound 131, the polymer binder particles 133 and the inorganic particles 135 are uniformly dispersed in a slurry for a coating layer for forming the coating layer, and as the slurry for a coating layer is coated, the dispersion medium or the solvent is removed, and the boron nitride-based compound 131, the polymer binder particles 133 and the inorganic particles 135 may be distributed in a uniform content. Each content (weight) of the boron nitride-based compound 131, the polymer binder particles 133 and the inorganic particles 135 is uniform in the coating layer, and even when there are some differences, the differences may be about 5%. By the boron nitride-based compound 131, the polymer binder particles 133 and the inorganic particles 135 being uniformly included in the coating layer 130 as described above, compression resistance of the separator may be improved.

According to one embodiment of the present disclosure, the content of the inorganic particles 135 in the coating layer 130 may be 80 parts by weight or greater with respect to 100 parts by weight of the coating layer 130. Specifically, the content of the inorganic particles 135 in the coating layer 130 may be 81 parts by weight or greater and less than 100 parts by weight, 82 parts by weight or greater and 99 parts by weight or less, 83 parts by weight or greater and 98 parts by weight or less, 84 parts by weight or greater and 97 parts by weight or less, 85 parts by weight or greater and 96 parts by weight or less, 86 parts by weight or greater and 95 parts by weight or less, 87 parts by weight or greater and 94 parts by weight or less, 88 parts by weight or greater and 93 parts by weight or less, 89 parts by weight or greater and 92 parts by weight or less, or 90 parts by weight or greater and 91 parts by weight or less, with respect to 100 parts by weight of the coating layer 130. By adjusting the content of the inorganic particles 135 included in the coating layer 130 in the above-described range, the polymer binder particles and the inorganic particles may be uniformly distributed in the coating layer, and compression resistance and heat resistance of the coating layer may be improved.

According to one embodiment of the present disclosure, the content of the boron nitride-based compound 131 in the coating layer 130 may be 0.1 parts by weight or greater and 20 parts by weight or less with respect to 100 parts by weight of the coating layer 130. By adjusting the content of the boron nitride-based compound in the coating layer in the above-described range, insulation and thermal conduction properties of the separator are improved using insulation properties of the boron nitride-based compound, and transition metal ions eluted from an electrode may be adsorbed by inducing polarity of the compound resulting from a difference in the electronegativity between nitrogen and boron in the boron nitride-based compound.

According to one embodiment of the present disclosure, the boron nitride-based compound may form a network in the coating layer. Specifically, the boron nitride-based compound may be connected to each other to form a single net (web). By the boron nitride-based compound forming a network in the coating layer as described above, heat resistance of the boron nitride-based compound may be uniformly embodied throughout the coating layer.

According to one embodiment of the present disclosure, the boron nitride-based compound 131 may be a boron nitride nanotube (BNNT). By using a boron nitride nanotube as the boron nitride-based compound as described above, insulation and thermal conduction properties of the separator are improved using insulation properties of the boron nitride nanotube, and transition metal ions eluted from an electrode may be adsorbed by inducing polarity of the compound resulting from a difference in the electronegativity between nitrogen and boron in the boron nitride nanotube.

According to one embodiment of the present disclosure, the boron nitride-based compound 131 may have an average outer diameter of 10 nm or greater and 100 nm or less. Specifically, the boron nitride-based compound 131 may have an average outer diameter of 20 nm or greater and 90 nm or less, 30 nm or greater and 80 nm or less, 40 nm or greater and 70 nm or less, or 50 nm or greater and 60 nm or less. By adjusting the average outer diameter of the boron nitride-based compound 131 in the above-described range, a uniform network is formed in the coating layer, thereby improving thermal stability, mechanical strength and electrical insulation of the separator.

According to one embodiment of the present disclosure, the boron nitride-based compound 131 may have an average length of 1 µm or greater and 50 µm or less. Specifically, the boron nitride-based compound 131 may have an average length of 5 µm or greater and 45 µm or less, 10 µm or greater and 40 µm or less, 15 µm or greater and 35 µm or less, or 20 µm or greater and 30 µm or less. By adjusting the average length of the boron nitride-based compound 131 in the above-described range, a uniform network is formed in the coating layer, thereby improving thermal stability, mechanical strength and electrical insulation of the separator.

According to one embodiment of the present disclosure, the boron nitride-based compound 131 may have an aspect ratio of 10 or greater and 5,000 or less. Specifically, the boron nitride-based compound 131 may have an aspect ratio of 500 or greater and 4,500 or less, 1,000 or greater and 4,000 or less, 1,500 or greater and 3,500 or less, or 2,000 or greater and 3,000 or less. By adjusting the aspect ratio of the boron nitride-based compound 131 in the above-described range, a uniform network is formed in the coating layer, thereby improving thermal stability and mechanical strength of the separator.

According to one embodiment of the present disclosure, the boron nitride-based compound 131 may have density of 1.0 g/cm³ or greater and 5.0 g/cm³ or less. Specifically, the boron nitride-based compound 131 may have density of 1.5 g/cm³ or greater and 4.5 g/cm³ or less, 2.0 g/cm³ or greater and 4.0 g/cm³ or less, or 2.5 g/cm³ or greater and 3.5 g/cm³ or less. By adjusting the density of the boron nitride-based compound 131 in the above-described range, energy density of an electrochemical device may be improved while having thermal stability and mechanical strength of the separator.

According to one embodiment of the present disclosure, the boron nitride-based compound 131 may have a specific surface area (BET) of 20 m²/g or greater and 55 m²/g or less. Specifically, the boron nitride-based compound 131 may have a specific surface area of 21 m²/g or greater and 54 m²/g or less, 22 m²/g or greater and 53 m²/g or less, 23 m²/g or greater and 52 m²/g or less, 24 m²/g or greater and 51 m²/g or less, 25 m²/g or greater and 50 m²/g or less, 26 m²/g or greater and 49 m²/g or less, 27 m²/g or greater and 48 m²/g or less, 28 m²/g or greater and 47 m²/g or less, 29 m²/g or greater and 46 m²/g or less, 30 m²/g or greater and 45 m²/g or less, 31 m²/g or greater and 44 m²/g or less, 32 m²/g or greater and 43 m²/g or less, 33 m²/g or greater and 42 m²/g or less, 34 m²/g or greater and 41 m²/g or less, 35 m²/g or greater and 40 m²/g or less, 36 m²/g or greater and 39 m²/g or less, or 37 m²/g or greater and 38 m²/g or less. By adjusting the specific surface area of the boron nitride-based compound 131 in the above-described range, energy density of an electrochemical device may be improved while having thermal stability and mechanical strength of the separator, and adsorption efficiency of the transition metal may be improved.

In the present specification, the "specific surface area" may be a BET surface area calculated from, when an adsorption isotherm is measured up to 1 bar under a -196°C condition using a BET-specific surface area analyzer (BEL, Microtrac), the measured N₂ adsorption isotherm using a Brunauer-Ennett-Teller (BET) model.

According to one embodiment of the present disclosure, the coating layer 130 may include a plurality of pores. Specifically, the coating layer may be a porous coating layer. More specifically, the coating layer may be a porous coating layer including a plurality of pores therein. By the coating layer including a plurality of pores as described above, the separator may allow lithium ions to pass through and a current to flow while physically blocking a negative electrode and a positive electrode.

According to one embodiment of the present disclosure, the coating layer 130 may be formed by the boron nitride-based compound and the inorganic particles 135 being bound by the polymer binder particles 133, and being integrated in the coating layer. The pores inside the coating layer 130 may result from an interstitial volume, an empty space between the boron nitride-based compounds and the inorganic particles.

According to one embodiment of the present disclosure, the coating layer 130 may be formed to a thickness of 1 µm to 20 µm with respect to any one side of the porous polymer substrate 110. By adjusting the thickness of the coating layer 130 in the above-described range, heat resistance or electrical resistance of the separator may be controlled in a proper range.

In one embodiment of the present disclosure, the thicknesses of the porous polymer substrate, the coating layer and/or the like may be measured using a contact-type thickness measurement device. As an example of the contact-type thickness measurement device, VL-50S-B manufactured by Mitutoyo Corporation may be used.

According to one embodiment of the present disclosure, the polymer binder particle 133 may be an acryl-based binder, a polyvinylidene-based binder, or a combination thereof. The combination of the acryl-based binder and the polyvinylidene-based binder may be a mixture of the acryl-based binder and the polyvinylidene-based binder, a copolymer including the acryl-based repeating unit and the polyvinylidene-based repeating unit, or a hybridized product of the acryl-based binder and the polyvinylidene-based binder. In addition, the polyvinylidene-based binder may be a copolymer of polyvinylidene fluoride (PVdF) and hexafluoropropylene (HFP). By selecting the polymer binder particle from those described above, porosity of the separator may be maintained, a battery may be readily manufactured by improving adhesive strength between the electrode and the separator in a lamination process of the battery, and a stacking process may be stably performed. Furthermore, porosity of the separator may be maintained, and adhesive strength may be maintained even when the coating layer is wet by an electrolyte liquid after activating the battery. Furthermore, stiffness of the battery is improved, and bending of the separator may be prevented.

According to one embodiment of the present disclosure, the acryl-based binder is a polymer including a carboxylic acid ester as a repeating unit, and may preferably be a (meth)acrylic acid ester or an acryl-styrene copolymer.

According to one embodiment of the present disclosure, specific examples of the (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra (meth) acrylate, dipentaerythritol hexa(meth)acrylate, allyl (meth)acrylate, ethylene di(meth)acrylate and the like, and may be one or more types selected from among these. Among these, one or more types selected from methyl (meth)acrylate, ethyl (meth)acrylate and 2-ethylhexyl (meth)acrylate are preferred, and methyl (meth)acrylate is particularly preferred.

According to one embodiment of the present disclosure, the acryl-styrene copolymer may include an acryl-based binder, and the acryl-based binder may be polyacrylate-based. For example, the acryl-based binder may be one or more types selected from the group consisting of styrene-butyl acrylate, styrene-butadiene rubber, nitrile-butadiene rubber, acrylonitrile-butadiene rubber, acrylonitrile-butadienestyrene rubber and acrylate-based polymers, and specifically, may be a copolymer including an acrylate.

According to one embodiment of the present disclosure, the polymer binder particle 133 may have a glass transition temperature (Tg) of 20°C or higher and 60°C or lower. Specifically, the polymer binder particles may have a glass transition temperature(Tg) of 22°C or higher and 58°C or lower, 24°C or higher and 56°C or lower, 26°C or higher and 54°C or lower, 28°C or higher and 52°C or lower, 30°C or higher and 50°C or lower, 32°C or higher and 48°C or lower, 34°C or higher and 46°C or lower, 36°C or higher and 44°C or lower, or 38°C or higher and 42°C or lower. By adjusting the glass transition temperature (Tg) of the polymer binder particle in the above-described range, viscosity of the slurry for preparing the coating layer may be controlled, and convenience of battery manufacturing may be improved.

According to one embodiment of the present disclosure, the average diameter (D₅₀) of the polymer binder particle 133 is not particularly limited, but is preferably in a range of 0.1 µm or greater and 1 µm or less for forming a coating layer 130 with uniform thickness and for proper porosity. Specifically, the polymer binder particle 135 may have an average diameter (D₅₀) of 0.2 µm or greater and 0.9 µm or less, 0.3 µm or greater and 0.8 µm or less, 0.4 µm or greater and 0.7 µm or less, or 0.5 µm or greater and 0.6 µm or less. By adjusting the average diameter (D₅₀) of the polymer binder particle 133 in the above-described range, dispersibility of the slurry prepared for preparing the coating layer is improved, and the thickness of the formed coating layer may be reduced.

According to one embodiment of the present disclosure, the polyvinylidene-based binder may be a polyvinylidene-based binder having a hexafluoropropylene (HFP) content of 1% by weight or greater and 50% by weight or less. Specifically, the polyvinylidene-based binder may have a hexafluoropropylene (HFP) content of 1% by weight or greater and 50% by weight or less, 2% by weight or greater and 45% by weight or less, 3% by weight or greater and 40% by weight or less, 4% by weight or greater and 35% by weight or less, 5% by weight or greater and 30% by weight or less, 7% by weight or greater and 25% by weight or less, or 10% by weight or greater and 20% by weight or less. By selecting a polyvinylidene-based binder having a hexafluoropropylene content of 1% by weight or greater and 50% by weight or less as the polyvinylidene-based binder, porosity of the separator may be maintained, and adhesive strength may be maintained even when the coating layer is wet by an electrolyte liquid after activating the battery. In the present specification, a degree of substitution of the polyvinylidene-based binder may mean a weight ratio including hexafluoropropylene.

According to one embodiment of the present disclosure, the content of the polymer binder particles 133 may be 20 parts by weight or less with respect to 100 parts by weight of the coating layer 130. Specifically, the content of the polymer binder particles 133 may be greater than 0 part by weight and 20 parts by weight or less, 1 part by weight or greater and 19 parts by weight or less, 2 parts by weight or greater and 18 parts by weight or less, 3 parts by weight or greater and 17 parts by weight or less, 4 parts by weight or greater and 16 parts by weight or less, 5 parts by weight or greater and 15 parts by weight or less, 6 parts by weight or greater and 14 parts by weight or less, 7 parts by weight or greater and 13 parts by weight or less, 8 parts by weight or greater and 12 parts by weight or less, 9 parts by weight or greater and 11 parts by weight or less, or 10 parts by weight or greater and 11 parts by weight or less, with respect to 100 parts by weight of the coating layer 130. By adjusting the content of the polymer binder particles 133 in the above-described range, assembly readiness may be improved in the process of assembling electrodes, and heat resistance of the coating layer may be improved.

According to one embodiment of the present disclosure, when combining the acryl-based binder and the polyvinylidene-based binder in the coating layer 130, the weight ratio may be 9:1 to 1:9. Specifically, when combining the acryl-based binder and the polyvinylidene-based binder in the coating layer 130, the weight ratio may be 8:1 to 1:8, 7:1 to 1:7, 6:1 to 1:6, 5:1 to 1:5, 4:1 to 1:4, 3:1 to 1:3 or 2:1 to 1:2. By adjusting the weight ratio between the acryl-based binder and the polyvinylidene-based binder in the above-described range, wet adhesive strength and dry adhesive strength of the separator for an electrochemical device may be improved at the same time.

According to one embodiment of the present disclosure, the inorganic particles 135 that may be used in the coating layer 130 may be a substance that is electrochemically stable. Specifically, the inorganic particles that may be used in one embodiment of the present disclosure may be a substance that does not undergo oxidation and/or reduction reactions in the operating voltage range (for example, 0 V to 5 V based on Li/Li⁺) of an applied electrochemical device.

According to one embodiment of the present disclosure, the inorganic particles 135 may include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony pentoxide (Sb₂O₅), boehmite and the like, and the inorganic particles may include one, or two or more thereof. Specifically, the inorganic particle 135 is preferably one selected from boehmite, alumina and combinations thereof. By selecting one selected from boehmite, alumina and combinations thereof as the inorganic particles as described above, heat resistance of the separator may be improved.

According to one embodiment of the present disclosure, an average diameter (D₅₀) of the inorganic particles 135 is not particularly limited, but is preferably in a range of 0.3 µm or greater and 1 µm or less for forming a coating layer 130 with a uniform thickness and proper porosity. Specifically, the inorganic particles 135 may have an average diameter (D₅₀) of 0.2 µm or greater and 0.9 µm or less, 0.3 µm or greater and 0.8 µm or less, 0.4 µm or greater and 0.7 µm or less, or 0.5 µm or greater and 0.6 µm or less. Specifically, when the average diameter is less than 0.3 µm, dispersibility of the inorganic particles in the slurry prepared for preparing the coating layer may be reduced, and when the average diameter is greater than 1 µm, the thickness of the formed coating layer may increase.

In the present specification, the "D₅₀ particle diameter" means a particle diameter at a 50% point in cumulative distribution of the number of particles depending on the particle diameter. The particle diameter may be measured using a laser diffraction method. Specifically, a powder to be measured is dispersed in a dispersion medium and then introduced to a commercially available laser diffraction particle size measurement device (for example, Microtrac S3500), and a difference in the diffraction pattern depending on the particle size is measured when the particles pass through the laser beam to calculate particle size distribution. The D₅₀ particle diameter may be measured by calculating a particle diameter at a 50% point in cumulative distribution of the number of particles depending on the particle diameter in the measurement device.

According to one embodiment of the present disclosure, the coating layer 130 may have porosity of 30% by volume or greater. Specifically, the coating layer 130 may have porosity of 30% by volume or greater and 70% by volume or less, 32% by volume or greater and 68% by volume or less, 34% by volume or greater and 66% by volume or less, 36% by volume or greater and 64% by volume or less, 38% by volume or greater and 62% by volume or less, 40% by volume or greater and 60% by volume or less, 42% by volume or greater and 58% by volume or less, 44% by volume or greater and 56% by volume or less, 46% by volume or greater and 54% by volume or less, or 48% by volume or greater and 52% by volume or less. By adjusting the porosity of the coating layer 130 in the above-described range, migration of ions is maintained in the separator, and an increase in the resistance of the separator may be prevented. Specifically, when the porosity is 70% by volume or less, dynamic properties capable of withstanding a press process of adhering with an electrode may be secured, and it is also suitable to secure adhesive strength since the surface opening ratio does not increase too much. Meanwhile, the porosity being 30% by volume or greater is advantageous in terms of ion permeability.

In the present specification, the "porosity" means a ratio of the volume occupied by pores with respect to the total volume. % by volume is used as a unit thereof, and the porosity may be used interchangeably with terms such as proportion of void.

In the present specification, the porosity may correspond to a value obtained by subtracting a volume converted into weight and density of each component of the porous polymer substrate 110 and/or the coating layer 130 from a volume calculated from thickness, width and length of the porous polymer substrate 110 and/or the coating layer 130.

In one embodiment of the present disclosure, the porosity and the pore size of the porous polymer substrate 110 and/or the coating layer 130 may be measured using a BET 6-dot method by employing a nitrogen gas adsorption flow method using a scanning electron microscope (SEM) image, a mercury porosimeter, a capillary flow porometer or a porosimetry analyzer (Bell Japan Inc, Belsorp-II mini). Herein, using a capillary flow porometer may be advantageous.

According to one embodiment of the present disclosure, the polyvinylidene-based binder may be an aqueous binder. Specifically, by selecting an aqueous binder as the polyvinylidene-based binder, contaminants discharged during the manufacturing process of the separator may be minimized, thereby reducing battery manufacturing costs.

According to one embodiment of the present disclosure, the separator may further include an adhesive layer on the coating layer. By further including the adhesive layer as described above, adhesive strength between the coating layer and an electrode to be described later may be improved.

According to one embodiment of the present disclosure, the adhesive layer may include a polymer binder.

According to one embodiment of the present disclosure, the polymer binder may have the particle form or a solution form.

According to one embodiment of the present disclosure, the polymer binder in the adhesive layer may be an acryl-based binder, a polyvinylidene-based binder, or a combination thereof. The combination of the acryl-based binder and the polyvinylidene-based binder may be a mixture of the acryl-based binder and the polyvinylidene-based binder, a copolymer including the acryl-based repeating unit and the polyvinylidene-based repeating unit, or a hybridized product of the acryl-based binder and the polyvinylidene-based binder. In addition, the polyvinylidene-based binder may be a copolymer of polyvinylidene fluoride (PVdF) and hexafluoropropylene (HFP). By selecting the polymer binder from those described above, adhesive strength between the coating layer and an electrode may be improved, and a stacking process may be stably performed. Furthermore, porosity of the separator may be maintained, and adhesive strength may be maintained even when the coating layer is wet by an electrolyte liquid after activating the battery. Furthermore, stiffness of the battery is improved, and bending of the separator may be prevented. Furthermore, description on the polymer binder overlaps with the description provided above in the polymer binder particles of the coating layer, and therefore, is not included.

According to one embodiment of the present disclosure, the separator may have a polymer binder being provided on the coating layer. Specifically, the separator may have a polymer binder being partially provided on the coating layer rather than being provided as one layer. The polymer binder may have a particle form or a dissolved form. When the polymer binder on the coating layer has a particle form, the polymer binder may be partially provided on the coating layer while maintaining a particle shape. When the polymer binder has a dissolved form, the polymer binder may be provided while forming a layer on a portion of the coating layer. By the separator having a polymer binder being provided on the coating layer as described above, adhesive strength with an electrode is secured, and porosity of the coating layer may be secured.

One embodiment of the present disclosure provides a method for manufacturing a separator for an electrochemical device, the method including: mixing a slurry for a coating layer 130 including a boron nitride-based compound 131, polymer binder particles 133 and inorganic particles 135 (S10); coating the slurry for a coating layer on at least one surface of a porous polymer substrate 110 (S30); and providing a coating layer 130 by drying the slurry for a coating layer (S50).

The method for manufacturing a separator for an electrochemical device according to one embodiment of the present disclosure may improve heat resistance of the separator.

According to one embodiment of the present disclosure, the method for manufacturing a separator for an electrochemical device 100 includes mixing a slurry for a coating layer including a boron nitride-based compound 131, polymer binder particles 133 and inorganic particles 135 (S10). By including the mixing of a slurry for a coating layer including a boron nitride-based compound 131, polymer binder particles 133 and inorganic particles 135 (S10) as described above, a coating layer may be readily formed on the separator.

According to one embodiment of the present disclosure, the slurry for a coating layer may be provided by preparing a polymer emulsion through dispersing the polymer binder particles 133 in water, a proper dispersion medium. By providing the slurry for a coating layer by preparing a polymer emulsion through dispersing the polymer binder particles 133 in water, a proper dispersion medium, as described above, contaminants generated during the manufacturing process may be minimized. In the present specification, the dispersion medium is used during the process of preparing the slurry, and may mean a solvent.

According to one embodiment of the present disclosure, a boron nitride-based compound 131 and inorganic particles 135 may be added and dispersed in the polymer emulsion. The content ratio between the boron nitride-based compound, the inorganic particles and the polymer binder particles is as described above, and is properly controlled considering the thickness, pore size and porosity of the finally prepared coating layer according to one embodiment of the present disclosure.

According to one embodiment of the present disclosure, the boron nitride-based compound 131, the polymer binder particles 133 and the inorganic particles 135 may be dispersed in water, a dispersion medium, to prepare the slurry for a coating layer. Specifically, without preparing the polymer emulsion as described above, the boron nitride-based compound 131, the polymer binder particles 133 and the inorganic particles 135 may be directly dispersed in water, a dispersion medium, to prepare the slurry for a coating layer.

According to one embodiment of the present disclosure, the slurry for a coating layer may have a solid content of 10% by weight or greater and 50% by weight or less. Specifically, the slurry for a coating layer may have a solid content of 15% by weight or greater and 40% by weight or less, 20% by weight or greater and 35% by weight or less, or 15% by weight or greater and 40% by weight or less. By adjusting the solid content of the slurry for a coating layer in the above-described range, workability of the coating layer preparation process may be improved.

According to one embodiment of the present disclosure, the method for manufacturing a separator for an electrochemical device 100 includes coating the slurry for a coating layer on at least one surface of a porous polymer substrate 110 (S30). By including the coating of the slurry for a coating layer on at least one surface of a porous polymer substrate 110 as described above, the coating layer 130 may be formed with one-time coating, and the inorganic particles, the polymer binder particles and the boron nitride-based compound are distributed at a uniform concentration in the slurry for a coating layer, and as a result, a uniform coating layer may be formed.

According to one embodiment of the present disclosure, the method for coating the slurry for a coating layer on the surface of the porous polymer substrate 110 is not particularly limited to any one method, and common methods known in the art may be used. For example, various methods such as dip coating, die coating, roll coating, comma coating or mixed methods thereof may be used.

According to one embodiment of the present disclosure, the method for manufacturing a separator for an electrochemical device 100 includes providing a coating layer 130 by drying the slurry for a coating layer (S50). By including the providing of a coating layer 130 by drying the slurry for a coating layer (S50) as described above, damages to the coating layer may be minimized, and the dispersion medium included in the slurry may be readily removed.

According to one embodiment of the present disclosure, the temperature of the drying process may be 25°C or higher and 75°C or lower. Specifically, the temperature of the drying process may be 30°C or higher and 70°C or lower, 35°C or higher and 65°C or lower, 40°C or higher and 60°C or lower, or 45°C or higher and 55°C or lower. By adjusting the temperature of the drying process in the above-described range, denaturation of the porous polymer substrate is prevented, and the dispersion medium may be effectively removed.

According to one embodiment of the present disclosure, the drying process properly sets the time condition so as to minimize the occurrence of surface defects in the coating layer 130. For the drying, a drying auxiliary device such as a drying oven or hot air may be used within an appropriate extent.

According to one embodiment of the present disclosure, the method may further include forming an adhesive layer by coating a slurry for an adhesive layer including a polymer binder on the coating layer. By further including the forming of an adhesive layer by coating a slurry for an adhesive layer including a polymer binder on the coating layer as described above, adhesive strength between the separator and an electrode may be improved, adhesive strength may be maintained in a lamination process with the electrode, stiffness may be improved or bending of a pouch-type cell may be prevented by maintaining adhesive strength after activating a battery.

According to one embodiment of the present disclosure, a dispersion medium or a solvent of the slurry for an adhesive layer may be water. By selecting the dispersion medium or the solvent of the slurry for an adhesive layer as described above, environmental pollution caused by the dispersion medium or the solvent may be prevented.

According to one embodiment of the present disclosure, the method may further include drying the coated adhesive layer.

According to one embodiment of the present disclosure, the separator 100 is interposed between a positive electrode 300 and a negative electrode 500, and a lamination process of applying heat and/or pressure thereto for bonding is used to manufacture an electrochemical device 1000. In one embodiment of the present disclosure, the lamination process may be performed using a roll press device including a pair of pressure rollers. In other words, a negative electrode 500, the separator 100 and a positive electrode 300 are sequentially laminated, and inserted between the pressure rollers to achieve interlayer bonding. Herein, the lamination process may be performed using a method of hot pressing.

One embodiment of the present disclosure provides an electrochemical device 1000 including: a positive electrode 300; a negative electrode 500; and the separator 100 interposed between the positive electrode 300 and the negative electrode 500.

The electrochemical device 1000 according to one embodiment of the present disclosure minimizes dendrites formed on an electrode, thereby achieving battery safety, and improving battery performance.

FIG. 2 is a schematic diagram of the electrochemical device 1000 according to one embodiment of the present disclosure. The electrochemical device 1000 according to one embodiment of the present disclosure will be specifically described with reference to FIG. 2.

In one embodiment of the present disclosure, the electrochemical device is a device converting chemical energy into electrical energy by an electrochemical reaction, and is a concept encompassing a primary battery and a secondary battery. In the present specification, the secondary battery is capable of charging and discharging, and refers to, a lithium secondary battery, a nickel-cadmium battery, a nickel-hydrogen battery or the like. The lithium secondary battery uses lithium ions as an ion conductor, and examples thereof may include a non-aqueous electrolyte secondary battery including a liquid electrolyte, an all-solid-state battery including a solid electrolyte, a lithium polymer battery including a gel polymer electrolyte, a lithium metal battery using lithium metal as a negative electrode, and the like, but are not limited thereto.

In one embodiment of the present disclosure, the electrochemical device may have a cylindrical shape. Specifically, the electrochemical device may have an electrode assembly including the positive electrode, the separator and the negative electrode being embedded in a cylindrical metal case. More specifically, the electrochemical device having a cylindrical shape may be manufactured by storing a jelly-roll-type electrode assembly in a cylindrical metal case, injecting an electrolyte liquid into the cylindrical metal case, and then binding an electrode terminal-formed cap to the open top of the metal case. By manufacturing the electrochemical device to have a cylindrical shape as described above, capacity may be improved, and structural safety may be improved.

According to one embodiment of the present disclosure, the positive electrode is provided with a positive electrode current collector, and a positive electrode active material layer including a positive electrode active material, a conductor and a binder resin on at least one side surface of the current collector. The positive electrode active material may include one type of a layered compound or a compound substituted with one or more transition metals such as lithium manganese composite oxide (LiMn₂O₄, LiMnO₂ and the like), lithium cobalt oxide (LiCoO₂) or lithium nickel oxide (LiNiO₂); lithium manganese oxide such as a chemical formula of Li₁₊ₓMn₂₋ₓO₄ (herein, x is from 0 to 0.33), LiMnO₃, LiMn₂O₃ or LiMnO₂; lithium copper oxide (Li₂CuO₂); vanadium oxide such as LiV₃O₈, LiV₃O₄, V₂O₅ or Cu₂V₂O₇; Ni-site-type lithium nickel oxide represented by a chemical formula of LiNi₁₋ₓMₓO₂ (herein, M=Co, Mn, Al, Cu, Fe, Mg, B or Ga, and x=0.01 to 0.3); lithium manganese composite oxide represented by a chemical formula of LiMn₁₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); LiMn₂O₄ in which some of Li in the chemical formula are substituted with alkaline earth metal ions; a disulfide compound; and Fe₂(MoO₄)₃, or a mixture of two or more types thereof.

According to one embodiment of the present disclosure, the negative electrode is provided with a negative electrode current collector, and a negative electrode active material layer including a negative electrode active material, a conductor and a binder resin on at least one side surface of the current collector. The negative electrode may include, as the a negative electrode active material, one type selected from among lithium metal oxide; carbon such as non-graphitizable carbon or graphite-based carbon; metal composite oxide such as LiₓFe₂O₃ (0≤x≤1), LiₓWO₂ (0≤x≤1), Sn_{xMe1-x}Me'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; and titanium oxide, or a mixture of two or more types thereof.

According to one embodiment of the present disclosure, the conductor may be, for example, any one selected from the group consisting of graphite, carbon black, carbon fiber or metal fiber, metal powder, conductive whisker, conductive metal oxide, activated carbon and polyphenylene derivative, or a mixture of two or more types of conductive materials thereof. More specifically, the conductor may be one type selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more types of conductive materials thereof.

According to one embodiment of the present disclosure, the current collector is not particularly limited as long as it has high conductivity without causing chemical changes to the corresponding battery, and, for example, stainless steel, copper, aluminum, nickel, titanium, baked carbon, or aluminum or stainless steel of which surface is treated with carbon, nickel, titanium, silver or the like, and the like may be used.

According to one embodiment of the present disclosure, as the binder resin, polymers commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

According to one embodiment of the present disclosure, the positive electrode slurry for preparing the positive electrode active material layer may include a dispersant, and the dispersant may be a pyrrolidone-based compound. Specifically, the dispersant may be N-methylpyrrolidone (ADC-01, LG Chem).

According to one embodiment of the present disclosure, the content of the dispersant included in the positive electrode slurry may be greater than 0 part by weight and 0.5 parts by weight or less with respect to 100 parts by weight of the positive electrode slurry. Specifically, the content of the dispersant included in the positive electrode slurry may be greater than 0.05 parts by weight and 0.4 parts by weight or less with respect to 100 parts by weight of the positive electrode slurry.

According to one embodiment of the present disclosure, the negative electrode slurry for preparing the negative electrode active material layer may include a dispersant, and the dispersant may be a polypyrrolidone-based compound. Specifically, the dispersant may be polyvinylpyrrolidone (Junsei Chemical CO., Ltd. of Japan).

According to one embodiment of the present disclosure, the content of the dispersant included in the negative electrode slurry may be greater than 0 part by weight and 0.5 parts by weight or less with respect to 100 parts by weight of the negative electrode slurry. Specifically, the content of the dispersant included in the negative electrode slurry may be greater than 0.05 parts by weight and 0.4 parts by weight or less with respect to 100 parts by weight of the negative electrode slurry.

According to one embodiment of the present disclosure, the electrochemical device manufactured as above may be inserted into a proper case, and an electrolyte liquid may be injected thereinto to manufacture a battery.

According to one embodiment of the present disclosure, the electrolyte liquid is obtained by dissolving or dissociating a salt having a structure such as A⁺B⁻ in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻ or C(CF₂SO₂)₃⁻ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone) or a mixture thereof, however, the electrolyte liquid is not limited thereto.

One embodiment of the present disclosure provides a battery module including a battery including the electrochemical device as a unit cell, a battery pack including the battery module, and a device including the battery pack as a power source. Specific examples of the device may include power tools powered by an electric motor; electric motor vehicles including electric vehicles (EV), hybrid electric vehicles (HEV), plug-in hybrid electric vehicles (PHEV) and the like; electric two-wheeled bicycles including electric bicycles (E-bike) and electric scooters (E-scooter); electric golf carts; systems for power storage and the like, but are not limited thereto.

### Mode for Carrying Out Invention

Hereinafter, the present disclosure will be described in detail with reference to examples in order to specifically describe the present disclosure. However, examples according to the present disclosure may be modified to various different forms, and the scope of the present disclosure is not construed as being limited to the examples described below. Examples of the present specification are provided in order to more fully describe the present disclosure to those having average knowledge in the art.

### <Example 1>

A polyethylene resin (weight average molecular weight 900,000) was extruded, and a porous polymer substrate (total thickness about 9 µm, porosity 40% by volume) was prepared using a wet method.

A boron nitride nanotube (average outer diameter: 50 nm, length: 25 µm, aspect ratio: 100, density 3.0 g/cm³, specific surface area (BET): 40 m²/g) as a boron nitride-based compound, styrene-butyl acrylate (glass transition temperature 40°C), an acryl-based binder, having a particle diameter of 500 nm as polymer binder particles, and boehmite (particle diameter: 500 nm) as inorganic particles were introduced to water and dispersed therein to prepare a slurry for a coating layer (solid concentration 20% by weight). The boron nitride-based compound, the polymer binder particles and the inorganic particles were employed to have a weight ratio of 2:5:93.

On both surfaces of the porous polymer substrate, the slurry for a coating layer was coated by a bar coating method using a doctor blade, and dried with air at 50°C using a heat gun to form a coating layer having a thickness of 1.5 µm on each of the both surfaces, and as a result, a separator having a total thickness of 12 µm was manufactured.

### <Example 2>

A separator was manufactured in the same manner as in Example 1, except that the boron nitride-based compound, the polymer binder particles and the inorganic particles were employed to have a weight ratio of 0.05:4.95:95.

### <Comparative Example 1>

A separator was manufactured in the same manner as in Example 1, except that the boron nitride-based compound, the polymer binder particles and the inorganic particles were employed to have a weight ratio of 0:5:95.

### <Comparative Example 2>

A separator was manufactured in the same manner as in Example 1, except that the boron nitride-based compound, the polymer binder particles and the inorganic particles were employed to have a weight ratio of 25:5:70.

### <Manufacture of Electrochemical Device>

### 1) Preparation of Positive Electrode

A positive electrode active material (LiNi_{0.8}Mn_{0.1}Co_{0.1}O₂), a conductor (carbon black), a dispersant (N-methylpyrrolidone, ADC-01, LG Chem.) and a binder resin (mixture of PVDF-HFP and PVDF) were mixed with water in a weight ratio of 97.5:0.7:0.14:1.66 to prepare a slurry for a positive electrode active material layer in which the components other than water had a concentration of 50 wt%. Then, the slurry was coated on a surface of an aluminum thin film (thickness 10 µm), and dried to prepare a positive electrode having a positive electrode active material layer (thickness 120 µm).

### 2) Preparation of Negative Electrode

Graphite (blend of natural graphite and artificial graphite), conductor (carbon black), a dispersant (polyvinylpyrrolidone, Junsei Chemical CO., Ltd. of Japan) and a binder resin (mixture of PVDF-HFP and PVDF) were mixed with water in a weight ratio of 97.5:0.7:0.14:1.66 to prepare a slurry for a negative electrode active material layer in which the components other than water had a concentration of 50 wt%. Then, the slurry was coated on a surface of a copper thin film (thickness 10 µm), and dried to prepare a negative electrode having a negative electrode active material layer (thickness 120 µm).

### <Experimental Example 1: Air Permeability>

For the separator of each of Examples 1 and 2 and Comparative Examples 1 and 2, air permeability was measured using the method of ASTM D-2873. Specifically, air permeability was measured using a Gurley type densometer (No.158) manufactured by Toyo Seiki Seisaku-Sho, Ltd. in accordance with the Japanese Industrial Standard Gurley (JIS Gurley) measurement method. The air permeability value was expressed as the time (seconds) taken for 100 ml of air to pass through a cross section of 1 in² of the separator under a pressure of 12.2 in H₂O, that is, the air permeating time.

### <Experimental Example 2: Measurement of Dry Thermal Shrinkage>

The separator of each of Examples 1 and 2 and Comparative Examples 1 and 2 was cut to a size of 50 mmx50 mm, placed between A4 papers, and introduced to a convection oven for 30 minutes at 150°C. Then, dry thermal shrinkage in a machine direction (MD) and a transverse direction (TD) was measured.

The dry thermal shrinkage (%) was calculated using the following Mathematical Equation 1.
[Mathematical Equation 1] Dry thermal shrinkage (%)=(initial length-length after heat treatment)/(initial length)x100

### <Experimental Example 3: Measurement of Wet Thermal Shrinkage>

The separator of each of Examples 1 and 2 and Comparative Examples 1 and 2 was cut to a size of 50 mmx50 mm and then introduced to a pouch together with an electrolyte liquid, and the pouch was sealed. Dimensional changes were observed after performing heat treatment thereon for 30 minutes at 135°C.

The electrolyte liquid was prepared by dissolving lithium hexafluorophosphate (LiPF₆) having a concentration of 1.0 M in an organic solvent formed with ethylene carbonate (EC), ethylmethyl carbonate (EMC) and diethyl carbonate (DEC) (mixed volume ratio of EC/EMC/DEC=3:4:3).

The wet thermal shrinkage was calculated using the following Mathematical Equation 2.
[Mathematical Equation 2] Wet thermal shrinkage (%)=(initial length-length after heat treatment)/(initial length)x100

### <Experimental Example 4: Measurement of Peel Strength>

In order to evaluate adhesive strength between the porous polymer substrate and the coating layer in the separator of each of Examples 1 and 2 and Comparative Examples 1 and 2, peel strength was measured according to the following method.

First, the separator was cut to a size of 15 mmx100 mm. A double-sided adhesive tape was attached on a glass plate, and the cut separator was attached to the adhesive tape so that the coating layer surface of the cut separator adhered to the adhesive tape.

After that, the end of the adhered separator was installed on a UTM device (LLOYD Instrument LF Plus), and then force was applied at a measurement rate of 300 mm/min and an angle of 180° to measure the force required for the porous polymer substrate and the coating layer to be peeled off. Additionally, in the separator manufacturing process of each of Examples 1 and 2 and Comparative Examples 1 and 2, the surface coated with the slurry for a coating layer first was set as Surface A, and the surface coated second was set as Surface B, and peel strength was measured for each of Surface A and Surface B.

### <Experimental Example 5: Measurement of Breakdown Voltage>

For the separator of each of Examples 1 and 2 and Comparative Examples 1 and 2, the sample cut to a size of 5 cmx5 cm was placed between aluminum jigs (upper jig diameter 30 mm, lower jig 50 mmx100 mm), and a voltage at which a Fail condition (>0.5 mA, 3 sec) occurred was measured using a Hipot tester. Herein, the measurement condition was set as a condition of direct current (DC), current 0.5 mA and voltage increase 100 V/s (up to 3 kV). The measured value was expressed as an average value of 30 samples.

**[Table 1]**

| | | Examp le 1 | Compar ative Exampl e 1 | Examp le 2 | Compar ative Exampl e 2 |
|---|---|---|---|---|---|
| Thickness (Unit: µm) | | 12 | 12 | 12 | 12 |
| Air Permeability (Unit: S/100cc) | | 175 | 170 | 169 | 190 |
| Dry Thermal Shrinkage (Unit: %) | MD Direction | 3 | 14 | 13 | 2 |
| | TD Direction | 2 | 11 | 12 | 1 |
| Wet Thermal Shrinkage (Unit: %) | MD Direction | 9 | 54 | 55 | 6 |
| | TD Direction | 9 | 52 | 54 | 4 |
| Peel Strength (Unit: Gf/15 mm) | Surface A | 35 | 37 | 36 | 10 |
| | Surface B | 39 | 33 | 34 | 11 |
| Breakdown Voltage (Unit: V) | | 1,438 | 1,284 | 1,275 | 1,567 |

Referring to Table 1, it was identified that Example 1 including BNNT as the boron nitride-based compound had, while obtaining similar levels of air permeability and peel strength to existing separators, reduced dry thermal shrinkage and wet thermal shrinkage, and the breakdown voltage increased.

In contrast, it was identified that, in Comparative Example 1 that did not include BNNT and Example 2 that included a small amount of BNNT, dry thermal shrinkage and wet thermal shrinkage rapidly increased, reducing heat resistance, and the breakdown voltage was reduced. Furthermore, it was identified that Comparative Example 2 including an excessive amount of BNNT had reduced dry thermal shrinkage and wet thermal shrinkage, however, the breakdown voltage rapidly increased as the peel strength was reduced.

Accordingly, by including a boron nitride-based compound in the coating layer of the separator, which is one embodiment of the present disclosure, heat resistance may be improved.

### [Reference Numeral]

100: Separator for Electrochemical Device
110: Porous Polymer Substrate
130: Coating Layer
130a: One Portion
130b: Other Portion
131: Boron Nitride-Based Compound
133: Polymer Binder Particles
135: Inorganic Particles
300: Positive Electrode
500: Negative Electrode
1000: Electrochemical Device

## Claims

1. A separator for an electrochemical device, the separator comprising:
a porous polymer substrate; and
a coating layer provided on at least one surface of the porous polymer substrate and including a boron nitride-based compound, polymer binder particles and inorganic particles,
wherein a content of the inorganic particles is 80 parts by weight or greater with respect to 100 parts by weight of the coating layer.

2. The separator of claim 1, wherein a content of the boron nitride-based compound in the coating layer is 0.1 parts by weight or greater and 20 parts by weight or less with respect to 100 parts by weight of the coating layer.

3. The separator of claim 1, wherein the boron nitride-based compound is a boron nitride nanotube.

4. The separator of claim 1, wherein the boron nitride-based compound has an average outer diameter of 10 nm or greater and 100 nm or less.

5. The separator of claim 1, wherein the boron nitride-based compound has an average length of 1 µm or greater and 50 µm or less.

6. The separator of claim 1, wherein the boron nitride-based compound has an aspect ratio of 10 to 5,000.

7. The separator of claim 1, wherein the boron nitride-based compound has density of 1.0 g/cm³ or greater and 5.0 g/cm³ or less.

8. The separator of claim 1, wherein the boron nitride-based compound has a specific surface area of 20 m²/g or greater and 55 m²/g or less.

9. The separator of claim 1, wherein the inorganic particle is one selected from boehmite, alumina and combinations thereof.

10. An electrochemical device comprising:
a positive electrode;
a negative electrode; and
the separator of any one of claims 1 to 9 interposed between the positive electrode and the negative electrode.
